# EUROPÄISCHE PATENTSCHRIFT

(11) **EP 4 010 603 B1**
(45) Veröffentlichungstag und Bekanntmachung des Hinweises auf die Patenterteilung: **19.06.2024**
(21) Anmeldenummer: 20734709.7
(22) Anmeldetag: 24.06.2020
(51) Int. Cl.: B62D 7/18, F16C 35/04

(54) **RADTRÄGEREINRICHTUNG FÜR EIN FAHRZEUG, INSBESONDERE FÜR EIN KRAFTFAHRZEUG, SOWIE FAHRZEUG, INSBESONDERE KRAFTFAHRZEUG**
WHEEL CARRIER DEVICE FOR A VEHICLE, IN PARTICULAR FOR A MOTOR VEHICLE, AND A VEHICLE, IN PARTICULAR MOTOR VEHICLE
DISPOSITIF DE SUPPORT DE ROUE POUR VÉHICULE, EN PARTICULIER POUR VÉHICULE À MOTEUR, ET VÉHICULE, EN PARTICULIER VÉHICULE À MOTEUR

(30) Priorität: 08.08.2019 DE 102019211953
(43) Veröffentlichungstag der Anmeldung: 15.06.2022
(73) Patentinhaber: Audi AG, 85045 Ingolstadt (DE)
(72) Erfinder: KOPP, Andreas, 85092 Kösching (DE)
(86) Internationale Anmeldenummer: PCT/EP2020/067578
(87) Internationale Veröffentlichungsnummer: WO 2021/023433

(56) Entgegenhaltungen:
- WO-A1-86/01160
- DE-A1-102009 056 349
- DE-A1-102013 001 117
- DE-B3-102018 202 129
- US-A- 2 451 124

## Beschreibung

Die Erfindung betrifft eine Radträgereinrichtung für ein Fahrzeug gemäß dem Oberbegriff von Patentanspruch 1. Die Erfindung betrifft auch ein Fahrzeug, insbesondere ein Kraftfahrzeug.

Die DE 7301716 U offenbart ein elastisches Lager zur federnden Abstützung von Schienenfahrzeugachsen gegen den Wagenkasten oder das Fahrgestell. Der DE 2 309 550 A1 ist eine Fahrzeugaufhängung mit einer Feder aus elastomerem Material als bekannt zu entnehmen. Außerdem offenbart die DE 10 2013 001 114 A1 ein Radlager zum rotatorischen Lagern einer Radnabe eines Fahrzeugs, mit einer inneren Lagerschale mit wenigstens einer inneren Laufbahn, mit einer äußeren Lagerschale mit wenigstens einer äußeren Laufbahn und mit zwischen den beiden Lagerschalen angeordneten Wälzkörpern, die auf den Laufbahnen abrollen. Außerdem ist zumindest ein Heizelement innerhalb des Materials wenigstens einer der beiden Lagerschalen angeordnet, um einen Lagerraum zwischen den beiden Lagerschalen zu erwärmen, wobei die Wälzkörper in dem Lagerraum angeordnet sind.

Des Weiteren offenbart die DE 10 2018 202 129 B3 ein Temperaturregelungssystem für eine Antriebseinrichtung mit einer Isolationseinrichtung, welche ein Gehäuse der Antriebseinrichtung zumindest teilweise umgibt, mit einer Stelleinrichtung, welche dazu eingerichtet ist, einen Spalt zwischen der Isolationseinrichtung und dem Gehäuse bereitzustellen, und mit einer Steuereinrichtung, welche dazu eingerichtet ist, die Stelleinrichtung in Abhängigkeit von einem vorbestimmten Parameterwert anzusteuern, wobei die Steuereinrichtung dazu eingerichtet ist, die Stelleinrichtung anzusteuern, wenn der Parameterwert einen vorbestimmten Schwellwert überschreitet.

Zudem ist der DE 10 2013 001 117 A1 ein Radlager für die rotatorische Lagerung einer Radnabe eines Fahrzeugs als bekannt zu entnehmen. Das Radlager weist eine innere Lagerschale mit wenigstens einer inneren Laufbahn, eine äußere Lagerschale mit wenigstens einer äußeren Laufbahn und im Lagerraum zwischen den beiden Lagerschalen angeordnete Wälzkörper auf, die auf den Laufbahnen abrollen. Das Radlager umfasst Kontaktflächen zur Kontaktierung wenigstens eines benachbarten Bauteils, wobei wenigstens eine der Kontaktflächen eine Isolation aufweist, welche für die Wärmeisolation des Lagerraums ausgebildet ist.

Die WO86/01160 A1 offenbart eine radtragende Radnabe mit einem Radlager.

Schließlich offenbart die DE 10 2009 056 349 A1 ein Wälzlager mit einem Au-ßenring und einem Innenring sowie zwischen diesen über den Umfang verteilt angeordneten und auf diesen abwälzenden Walzkörpern, wobei am Außenumfang des Außenrings über zumindest einen Teil dessen axialer Breite und zumindest über einen Teil des Außenumfangs ein spanlos aus einer Kunststofffolie gefertigter Folienabschnitt angebracht ist.

Aufgabe der vorliegenden Erfindung ist es, eine Radträgereinrichtung und ein Fahrzeug zu schaffen, sodass ein besonders energiegünstiger Betrieb des Fahrzeugs realisiert werden kann.

Diese Aufgabe wird erfindungsgemäß durch eine Radträgereinrichtung mit den Merkmalen des Patentanspruchs 1 sowie durch ein Fahrzeug mit den Merkmalen des Patentanspruchs 7 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Radträgereinrichtung für ein vorzugsweise als Kraftfahrzeug, insbesondere als Kraftwagen, ausgebildetes Fahrzeug. Die Radträgereinrichtung weist wenigstens einen Radträger auf.

Beispielsweise dann, wenn der Radträger Bestandteil einer Lenkung, insbesondere einer Achsschenkellenkung, ist, ist der Radträger beispielsweise ein Achsschenkel. Dies bedeutet, dass der Achsschenkel beziehungsweise der Radträger beispielsweise um eine auch als Lenkachse bezeichnete Schwenkachse relativ zu einem beispielsweise als selbsttragende Karosserie ausgebildeten Aufbau des Fahrzeugs verschwenkt und dadurch gelenkt werden kann. Der Radträger weist wenigstens oder genau eine Lagerstelle auf, an welcher zumindest ein Radlager zum drehbaren Lagern einer Radnabe zu lagern beziehungsweise anordenbar ist. Die Lagerstelle weist beispielsweise eine auch als Aufnahme oder Ausnehmung bezeichnete Lageraufnahme auf, in welcher das Radlager beispielsweise zumindest teilweise, insbesondere zumindest überwiegend oder vollständig, aufnehmbar oder aufgenommen ist.

Um nun einen besonders effizienten und somit energiegünstigen, das heißt energieverbrauchsarmen, Betrieb des Fahrzeugs zu realisieren, ist es vorgesehen, dass der Radträger außenumfangsseitig zumindest teilweise von wenigstens einem insbesondere zusätzlich zu dem Radträger vorgesehenen und/oder separat von dem Radträger ausgebildeten Wärmeisolationselement umgeben ist. Hierdurch ist der Radträger als thermisch gedämmter beziehungsweise thermisch isolierter Radträger ausgebildet, sodass beispielsweise ein übermäßiger Wärmeübergang von dem Radträger an eine Umgebung der Radträgereinrichtung vermieden werden kann.

Um den Radträger nun besonders vorteilhaft thermisch isolieren beziehungsweise dämmen und in der Folge eine Verlustleistung besonders gering halten zu können, ist es erfindungsgemäß vorgesehen, dass das Wärmeisolationselement eine außenumfangsseitige Mantelfläche des Radträgers, das heißt beispielsweise dessen zuvor genannte Oberfläche, direkt berührt. Mit anderen Worten ist es vorzugsweise vorgesehen, dass der Radträger mit dem Wärmeisolationselement, insbesondere direkt, ummantelt ist.

Um die Lagerstelle und somit das Radlager besonders vorteilhaft thermisch isolieren zu können, ist es ferner vorgesehen, dass das Wärmeisolationselement die Lagerstelle auf wenigstens zwei unterschiedlichen, insbesondere gegenüberliegenden oder voneinander abgewandten, Seiten der Lagerstelle zumindest teilweise, insbesondere zumindest überwiegend oder vollständig, umgibt.

Untersuchungen haben gezeigt, dass die Verlustleistung eines Radlagers für ein Fahrzeug eine thermische Abhängigkeit besitzt. Grundsätzlich ist es denkbar, aktive Zuheizmaßnahmen wie beispielsweise wenigstens ein elektrisches Heizelement zu verwenden, um das Radlager unter Verwendung von elektrischer Energie und somit aktiv zu beheizen, das heißt zu erwärmen beziehungsweise warm zu halten. Dadurch kann die Verlustleistung eines Radlagers gering gehalten werden. Solche Zusatzheizmaßnahmen führen jedoch zu einer hohen Teileanzahl, einem hohen Gewicht, einem hohen Bauraumbedarf und insbesondere hohen Kosten. Demgegenüber ermöglicht es die Erfindung nun, ohne aktive Zuheizmaßnahme die beispielsweise während eines Betriebs des Fahrzeugs entstehende Verlustleistung des Radlagers und somit Wärme in und/oder an dem Radträger und dabei insbesondere im Bereich der Lagerstelle beziehungsweise des Radlagers zu halten, um dadurch eine vorteilhafte Temperatur der Radträgereinrichtung insbesondere im Bereich der Lagerstelle zu realisieren. Da dies ohne aktive Zuheizmaßnahmen möglich ist, kann eine besonders vorteilhafte Temperatur des Radträgers insbesondere im Bereich der Lagerstelle ohne zusätzlichen Energieaufwand und somit ohne Reichweitenverlust und/oder zusätzliche CO₂-Emissionen realisiert werden.

Der Erfindung liegt insbesondere die Erkenntnis zugrunde, dass bei herkömmlichen Fahrzeugen eine thermische Kopplung zwischen dem Radlager und dem Radträger existiert, wobei über diese thermische Kopplung Wärme von dem Radlager abgeführt werden kann. Die von dem Radlager abgeführte Wärme wird über den Radträger, insbesondere über dessen Oberfläche, an die Umgebung abgeführt. Dieser Effekt wird beispielsweise bei einer Fahrt des Fahrzeugs durch vorbeistreichenden beziehungsweise vorbeiströmenden Fahrtwind verstärkt. Die Erfindung ermöglicht es nun, eine übermäßige Wärmeabführung von dem Radträger und insbesondere von der Lagerstelle beziehungsweise dem Radlager an die Umgebung zu vermeiden, da beispielsweise der Radträger außenumfangsseitig mittels des Wärmeisolationselements gekapselt oder thermisch isoliert beziehungsweise gedämmt ist.

Es ist vorgesehen, dass der Radträger außenumfangsseitig zumindest überwiegend von dem Wärmeisolationselement umgeben ist. Darunter ist insbesondere zu verstehen, dass mehr als die Hälfte einer, insbesondere gesamten, außenumfangsseitigen Fläche beziehungsweise Oberfläche des Radträgers von dem Wärmeisolationselement umgeben ist. Dadurch kann ein übermäßiger Wärmeverlust besonders gut vermieden werden, sodass ein besonders effizienter Betrieb darstellbar ist.

Als weiterhin vorteilhaft hat es sich gezeigt, wenn das Wärmeisolationselement die Lagerstelle zumindest teilweise, insbesondere zumindest überwiegend oder vollständig, überlappt beziehungsweise überdeckt. Somit umgibt das Wärmeisolationselement vorzugsweise auch wenigstens eine oder mehrere freie Flächen, an denen das Radlager zu lagern beziehungsweise anordenbar ist. Hierdurch kann ein übermäßiger Wärmeabtransport von dem Radlager besonders gut vermieden werden, sodass ein besonders effizienter Betrieb darstellbar ist.

Durch Verwendung des Wärmeisolationselements erwärmt sich beispielsweise die Lagerstelle beziehungsweise das Radlager im Vergleich zu herkömmlichen Fahrzeugen und insbesondere während eines Betriebs des Fahrzeugs schneller, um Verlustleistungen werden gegenüber herkömmlichen Lösungen reduziert. Zudem kühlen das Radlager und die Lagerstelle während Standphasen im Vergleich zu herkömmlichen Lösungen langsamer ab, sodass beispielsweise bei einem Wiederstart des Fahrzeugs beziehungsweise bei einer Wiederaufnahme einer Fahrt des Fahrzeugs das Radlager und die Lagerstelle besonders vorteilhaft hohe Temperaturen aufweist. In der Folge kann die Verlustleistung des Radlagers besonders gering gehalten werden.

In fertig hergestelltem Zustand des Fahrzeugs wird das Radlager beispielsweise genutzt, um die Radnabe drehbar an dem Radträger zu lagern. Dabei ist im fertig hergestellten Zustand des Fahrzeugs wenigstens ein Rad des Fahrzeugs drehfest mit der Radnabe verbunden, wobei das Rad beispielsweise eine Felge und einen auf die Felge aufgezogenen Reifen aufweist. Messungen haben gezeigt, dass bei herkömmlichen Lösungen der Verbund aus Reifen und Radlager bei einem Temperaturunterschied von 10 Grad Celsius bis zu 3 Gramm pro Kilometer CO₂ an Fahrwiderstandsunterschied erzeugt. Durch die Erfindung können beispielsweise über eine lange Zeitdauer hinweg übermäßige Temperaturschwankungen des Radlagers vermieden werden, sodass dessen Verlustleistung besonders gering gehalten werden kann.

Vorzugsweise ist der Radträger einstückig ausgebildet. Als weiterhin besonders vorteilhaft hat es sich gezeigt, wenn die Radträgereinrichtung frei von aktiven Heizelementen ist, mittels welchen der Radträger beziehungsweise die Lagerstelle unter Verwendung von elektrischer Energie beheizt werden kann. Dadurch kann ein besonders energiegünstiger Betrieb gewährleistet werden.

Bei einer besonders vorteilhaften Ausführungsform der Erfindung ist der Radträger aus einem ersten, insbesondere metallischen, Werkstoff gebildet, wobei das Wärmeisolationselement aus einem von dem ersten Werkstoff unterschiedlichen zweiten Werkstoff, insbesondere aus einem Kunststoff, gebildet ist. Dadurch kann der Radträger mittels des Wärmeisolationselements besonders vorteilhaft thermisch isoliert werden.

In weiterer Ausgestaltung der Erfindung weist die Radträgereinrichtung das Radlager auf, welches an der Lagerstelle angeordnet beziehungsweise gelagert ist.

Dabei hat es sich als besonders vorteilhaft gezeigt, wenn das Radlager außenumfangsseitig zumindest teilweise, insbesondere zumindest überwiegend, von wenigstens einem weiteren, zwischen dem Radlager und dem Radträger angeordneten Wärmeisolationselement umgeben ist. Die vorigen und folgenden Ausführungen zu dem ersten Wärmeisolationselement können ohne Weiteres auch auf das weitere Wärmeisolationselement übertragen werden und umgekehrt. Durch Verwendung des weiteren Wärmeisolationselements kann insbesondere das Radlager gegenüber der Umgebung und insbesondere gegenüber dem Radträger thermisch isoliert beziehungsweise gekapselt werden, sodass ein besonders effizienter Betrieb darstellbar ist. Die Wärmeisolationselemente sind beispielsweise separat voneinander ausgebildet, oder aber die Wärmeisolationselemente sind einstückig miteinander ausgebildet.

Das weitere Wärmeisolationselement ist beispielsweise aus einem steifen, aber gering wärmeleitenden Material gebildet. Beispielsweise bildet das weitere Wärmeisolationselement einen Radlagersitz, an welchem das Radlager, insbesondere direkt, abgestützt und somit gelagert ist. Dadurch kann ein übermäßiger Wärmeübergang von dem Radlager an den Radträger vermieden werden, sodass die Verlustleistung des Radlagers in einem besonders geringen Rahmen gehalten werden kann.

Ein weiterer Aspekt betrifft eine Lagereinrichtung für ein Fahrzeug, insbesondere für ein Kraftfahrzeug, mit wenigstens einem Radlager zum drehbaren Lagern einer Radnabe an einem Radträger des Fahrzeugs. Um nun einen besonders energiegünstigen Betrieb des Fahrzeugs zu realisieren, ist es bei dem zweiten Aspekt der Erfindung vorgesehen, dass das Radlager außenumfangsseitig zumindest teilweise von wenigstens einem Wärmeisolationselement umgeben ist. Vorteile und vorteilhafte Ausgestaltungen des ersten Aspekts der Erfindung sind als Vorteile und vorteilhafte Ausgestaltungen des weiteren Aspekts anzusehen und umgekehrt. Insbesondere können die vorigen und folgenden Ausführungen zu dem Radträger und zu dem Wärmeisolationselement des ersten Aspekts der Erfindung entsprechend übertragen werden auf das Radlager und das Wärmeisolationselement gemäß dem weiteren Aspekt und umgekehrt.

Zur Erfindung kann auch eine Anordnung einer Lagereinrichtung, insbesondere gemäß dem weiteren Aspekt, an einem Radträger gehören. Bei der Anordnung ist die Lagereinrichtung an dem Radträger gehalten, wobei die Lagereinrichtung wenigstens ein Radlager zum drehbaren Lagern einer Radnabe an dem Radträger umfasst. Bei der Anordnung ist beispielsweise das Wärmeisolationselement zwischen dem Radträger und dem Radlager angeordnet, wobei das Wärmeisolationselement das Radlager außenumfangsseitig zumindest teilweise, insbesondere zumindest überwiegend, umgibt. Vorteile und vorteilhafte Ausgestaltungen des ersten Aspekts der Erfindung und des weiteren Aspekts sind als Vorteile und vorteilhafte Ausgestaltungen der erfindungsgemäßen Anordnung anzusehen und umgekehrt.

Ein zweiter Aspekt der Erfindung betrifft ein Fahrzeug, mit wenigstens einer Radträgereinrichtung gemäß dem ersten Aspekt der Erfindung und/oder mit wenigstens einer Lagereinrichtung gemäß dem weiteren Aspekt. Vorteile und vorteilhafte Ausgestaltungen des ersten Aspekts der Erfindung und des weiteren Aspekts und der Anordnung der Lagereinrichtung sind als Vorteile und vorteilhafte Ausgestaltungen des zweiten Aspekts der Erfindung anzusehen und umgekehrt.

Zu der Erfindung gehören auch Weiterbildungen des erfindungsgemäßen Fahrzeugs, die Merkmale aufweisen, wie sie bereits im Zusammenhang mit den Weiterbildungen der erfindungsgemäßen Radträgereinrichtung beziehungsweise der Lagereinrichtung beschrieben worden sind. Aus diesem Grund sind die entsprechenden Weiterbildungen des erfindungsgemäßen Fahrzeugs hier nicht noch einmal beschrieben.

Das erfindungsgemäße Fahrzeug ist vorzugsweise als Kraftfahrzeug und bevorzugt als Kraftwagen, insbesondere als Personenkraftwagen oder Lastkraftwagen, oder als Personenbus oder Motorrad ausgestaltet. Insbesondere ist das Fahrzeug vorzugsweise ein nicht an Schienen gebundenes Fahrzeug, wobei das Fahrzeug vorzugsweise ein Straßenfahrzeug ist.

Die Erfindung umfasst auch die Kombinationen der Merkmale der beschriebenen Ausführungsformen, wie in den beigefügten Ansprüchen definiert.

Im Folgenden sind Ausführungsbeispiele der Erfindung beschrieben. Hierzu zeigt:
- Fig. 1: eine schematische Perspektivansicht einer erfindungsgemäßen Radträgereinrichtung für ein Fahrzeug; und
- Fig. 2: eine schematische Perspektivansicht einer Lagereinrichtung für ein Fahrzeug.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

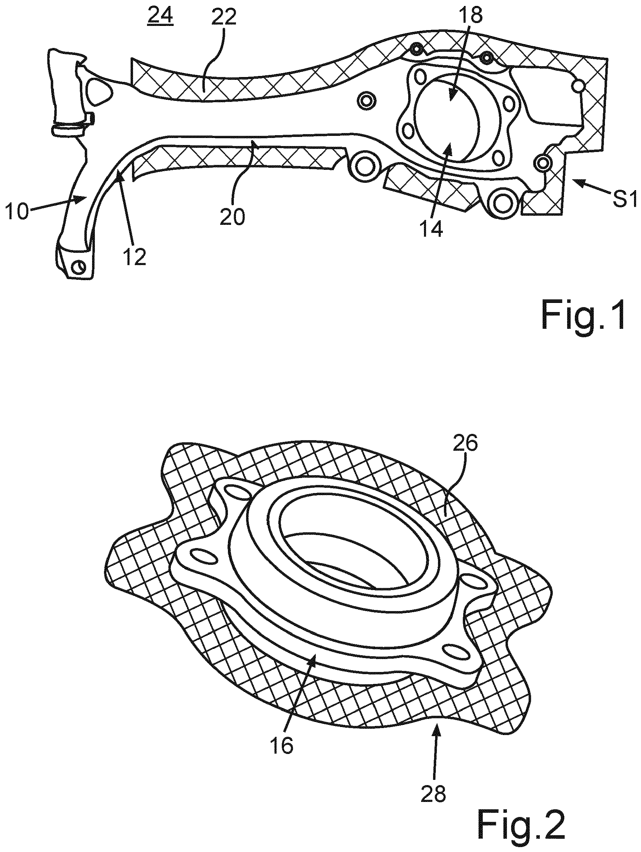

Fig. 1 zeigt in einer schematischen Perspektivansicht eine Radträgereinrichtung 10 für ein Fahrzeug, welches vorzugsweise ein Kraftfahrzeug, insbesondere ein Kraftwagen, ist. Die Radträgereinrichtung 10 weist wenigstens oder genau einen Radträger 12 auf. Das Fahrzeug weist in seinem vollständig hergestellten Zustand die Radträgereinrichtung 10 und somit den Radträger 12 auf. Insbesondere kann das Fahrzeug in seinem vollständig hergestellten Zustand eine beispielsweise als Achsschenkellenkung ausgebildete Lenkung aufweisen, wobei die Lenkung die Radträgereinrichtung 10 und somit den Radträger 12 umfassen kann. Dabei ist beispielsweise der Radträger 12 ein Achsschenkel, welcher um eine auch als Lenkachse bezeichnete Schwenkachse relativ zu einem beispielsweise als selbsttragende Karosserie ausgebildeten Aufbau des Fahrzeugs gelenkt und somit verschwenkt werden kann.

Der Radträger 12 weist wenigstens oder genau eine Lagerstelle 14 auf, an welcher zumindest oder genau ein beispielsweise aus Fig. 2 erkennbares Radlager 16 zum drehbaren Lagern einer Radnabe zu lagern oder gelagert ist. Dies bedeutet, dass im vollständig hergestellten Zustand des Fahrzeugs die zuvor genannte Radnabe über das Radlager 16 drehbar an der Lagerstelle 14 und somit drehbar an dem Radträger 12 gelagert ist, sodass sich die Radnabe um eine Drehachse relativ zu dem Radträger 12 drehen kann. Das Radlager 16 ist dabei beispielsweise als ein Wälzlager ausgebildet, welches einen Außenring, einen Innenring und Wälzkörper aufweist. Der Außenring und der Innenring werden auch als Lagerringe bezeichnete, welche jeweilige Laufbahnen aufweisen. Die Wälzkörper sind dabei zwischen den Lagerringen und dabei insbesondere zwischen den Laufbahnen angeordnet und wälzen bei einer Relativdrehung zwischen den Lagerringen an den Laufbahnen ab. Dabei ist im vollständig hergestellten Zustand des Fahrzeugs ein auch als Fahrzeugrad bezeichnetes Rad drehfest mit der Radnabe verbunden, sodass sich beispielsweise bei einer Fahrt des Fahrzeugs das Rad zusammen mit der Radnabe um die Drehachse relativ zu dem Radträger 12 dreht. Das Rad ist dabei ein Bodenkontaktelement, über welches das Fahrzeug in Fahrzeughochrichtung nach unten an einem Boden abstützbar oder abgestützt ist. Wird das Fahrzeug entlang des Bodens gefahren, während das Fahrzeug in Fahrzeughochrichtung nach unten über das Rad an dem Boden abgestützt ist, so rollt das Rad am Boden ab, und das Rad dreht sich um die Drehachse relativ zu dem Radträger 12.

Die Lagerstelle 14 weist dabei eine auch als Ausnehmung oder Aufnahme bezeichnete Lageraufnahme 18 auf, in welcher das Radlager 16 zumindest teilweise, insbesondere zumindest überwiegend oder vollständig, aufgenommen ist, insbesondere bezogen auf die axiale Richtung des Radlagers 16. Die axiale Richtung des Radlagers 16 fällt dabei mit der zuvor genannten Drehachse zusammen. Ist beispielsweise der Radträger 12 um die Lenkachse verschwenkbar, so ist auch das Rad um die Lenkachse relativ zu dem Aufbau verschwenkbar. Mit anderen Worten kann das Rad gelenkt werden, um dadurch beispielsweise Spurwechsel, Richtungsänderungen und Kurvenfahrten des Fahrzeugs zu bewirken.

Um nun einen besonders energiegünstigen Betrieb des Fahrzeugs realisieren zu können, ist der Radträger 12, insbesondere dessen außenumfangsseitige Mantelfläche 20, zumindest teilweise, insbesondere zumindest überwiegend, von wenigstens einem Wärmeisolationselement 22 umgeben. Bei dem in Fig. 1 gezeigten Ausführungsbeispiel ist das Wärmeisolationselement 22 zusätzlich zu dem Radträger 12 vorgesehen und separat von dem Radträger 12 ausgebildet. Dabei ist der Radträger 12 außenumfangsseitig zumindest überwiegend von dem Wärmeisolationselement 22 umgeben, sodass zumindest mehr als die Hälfte der außenumfangsseitigen Mantelfläche 20 von dem Wärmeisolationselement 22 umgeben ist. Die außenumfangsseitige Mantelfläche 20 wird auch als Fläche oder Oberfläche des Radträgers 12 bezeichnet.

Um eine übermäßige beziehungsweise übermäßig schnelle Wärmeabfuhr von dem Radträger 12 und insbesondere von der Lagerstelle 14 beziehungsweise von dem Radlager 16 an eine Umgebung 24 der Radträgereinrichtung 10 vermeiden und in der Folge einen besonders energiegünstigen Betrieb des Fahrzeugs realisieren zu können, überlappt das Wärmeisolationselement 22 die Lagerstelle 14 zumindest teilweise, insbesondere zumindest überwiegend oder vollständig. Insbesondere ist des vorzugsweise vorgesehen, dass das Wärmeisolationselement 22 die Lagerstelle 14 auf wenigstens zwei unterschiedlichen und insbesondere gegenüberliegenden beziehungsweise voneinander abgewandten Seiten zumindest teilweise, insbesondere zumindest überwiegend oder vollständig, umgibt. Eine der Seiten ist in Fig. 1 mit S1 bezeichnet. Die andere Seite ist in Fig. 1 nicht erkennbar, da sie beispielsweise eine Rückseite des Radträgers 12 ist und demzufolge von Betrachtern der Fig. 1 abgewandt ist.

Um einen übermäßigen Wärmeabtransport an die Umgebung 24 zu vermeiden, berührt das Wärmeisolationselement 22 die außenumfangsseitige Mantelfläche 20 direkt. Somit ist der Radträger 12 mit dem Wärmeisolationselement 22 ummantelt. Außerdem ist besonders gut aus Fig. 1 erkennbar, dass die Radträgereinrichtung 10 vollständig frei von Heizelementen ist, mittels welchen der Radträger 12 beziehungsweise die Lagerstelle 14 unter Verwendung von elektrischer Energie aktiv beheizt werden kann. Außerdem ist es vorzugsweise vorgesehen, dass der Radträger 12 aus einem ersten, insbesondere metallischen, Werkstoff gebildet ist, während das Wärmeisolationselement 22 vorzugsweise aus einem von dem ersten Werkstoff unterschiedlichen, zweiten Werkstoff, insbesondere aus einem Kunststoff, gebildet ist.

Aus Fig. 2 ist erkennbar, dass das Radlager 16 außenumfangsseitig zumindest teilweise von wenigstens einem weiteren Wärmeisolationselement 26 umgeben ist. Vorzugweise ist das Wärmeisolationselement 26 aus einem von dem ersten Werkstoff und/oder von dem zweiten Werkstoff unterschiedlichen, dritten Werkstoff gebildet, wobei der dritte Werkstoff und der zweite Werkstoff gleich sein können. Insbesondere kann das Wärmeisolationselement 26 aus einem Kunststoff gebildet sein.

In vollständig hergestelltem Zustand des Fahrzeugs beziehungsweise bei einer Anordnung des Radlagers 16 an dem Radträger 12 ist das Wärmeisolationselement 26 zumindest teilweise, insbesondere zumindest überwiegend oder vollständig, zwischen dem separat von dem Radträger 12 ausgebildeten Radlager 16 und dem Radträger 12 angeordnet. Somit ist beispielsweise das Radlager 16 mittels des Wärmeisolationselements 26 wärmetechnisch gegen den Radträger 12 und insbesondere gegen die Umgebung 24 gekapselt. Hierbei kann gegebenenfalls das Wärmeisolationselement 22 entfallen.

Durch Verwendung des Wärmeisolationselements 22 und/oder 26 kann sich beispielsweise das Radlager 16 während einer Fahrt des Fahrzeugs besonders schnell und insbesondere aufgrund einer Verlustleistung erwärmen, sodass in der Folge ein besonders energiegünstiger Betrieb darstellbar ist. Außerdem kann beispielsweise bei einer auf die Fahrt folgenden Stillstandsphase ein übermäßig schnelles Auskühlen des Radlagers 16 vermieden werden, sodass bei einer Wiederaufnahme der Fahrt das Radlager 16 eine besonders vorteilhaft hohe Temperatur aufweist. Insgesamt kann die Verlustleistung des Radlagers 16 gering gehalten werden, sodass das Fahrzeug besonders energiegünstig betrieben, insbesondere angetrieben, werden kann. Des Weiteren ist insgesamt erkennbar, dass das Wärmeisolationselement 22 beziehungsweise 26 eine thermische Dämmung beziehungsweise Kapselung des Radträgers 12 gegen die Umgebung 24 beziehungsweise das Radlager 16 gegen den Radträger 12 und insbesondere gegen die Umgebung 24 darstellt. Dadurch können übermäßige Wärmeverluste des Radlagers 16 vermieden werden. Außerdem kann das Radlager 16 besonders schnell erwärmt beziehungsweise warm gehalten werden, ohne dass hierzu zusätzliche, aktive Heizmaßnahmen erforderlich sind. In der Folge können der Energieverbrauch, die Teileanzahl, die Kosten, das Gewicht und der Bauraumbedarf besonders gering gehalten werden.

Vorzugsweise ist das Wärmeisolationselement 26, insbesondere auch unabhängig von dem Radträger 12, mit dem Radlager 16 verbunden. Außerdem ist aus Fig. 2 erkennbar, dass zumindest das Wärmeisolationselement 26 und das Radlager 16 eine Lagereinrichtung 28 bilden, welche das Radlager 16 und das das Radlager 16 außenumfangsseitig zumindest teilweise umgebende Wärmeisolationselement 26 umfasst.

## Patentansprüche

1. Radträgereinrichtung (10) für ein Fahrzeug, mit wenigstens einem Radträger (12), welcher wenigstens eine Lagerstelle (14) aufweist, an welcher zumindest ein Radlager (16) zum drehbaren Lagern einer Radnabe zu lagern ist, und außenumfangsseitig zumindest überwiegend von wenigstens einem Wärmeisolationselement (22) umgeben ist,
**dadurch gekennzeichnet, dass**
das Wärmeisolationselement (22) eine außenumfangsseitige Mantelfläche (20) des Radträgers (12) direkt berührt und das Wärmeisolationselement (22) die Lagerstelle (14) auf wenigstens zwei unterschiedlichen Seiten (S1) der Lagerstelle (14) zumindest teilweise umgibt.

2. Radträgereinrichtung (10) nach Anspruch 1,
**dadurch gekennzeichnet, dass**
das Wärmeisolationselement (22) die Lagerstelle (14) zumindest teilweise, insbesondere zumindest überwiegend oder vollständig, überlappt.

3. Radträgereinrichtung (10) nach Anspruch 1 oder 2,
**dadurch gekennzeichnet, dass**
das Wärmeisolationselement (22) die Lagerstelle (14) auf den wenigstens zwei unterschiedlichen Seiten (S1) der Lagerstelle (14) zumindest überwiegend umgibt.

4. Radträgereinrichtung (10) nach einem der vorhergehenden Ansprüche, **dadurch gekennzeichnet, dass**
der Radträger (12) aus einem ersten, insbesondere metallischen, Werkstoff und das Wärmeisolationselement (22) aus einem von dem ersten Werkstoff unterschiedlichen zweiten Werkstoff, insbesondere aus einem Kunststoff, gebildet ist.

5. Radträgereinrichtung (10) nach einem der vorhergehenden Ansprüche, **dadurch gekennzeichnet, dass**
die Radträgereinrichtung (10) das Radlager (16) aufweist, welches an der Lagerstelle (14) angeordnet ist.

6. Radträgereinrichtung (10) nach Anspruch 5,
**dadurch gekennzeichnet, dass**
das Radlager (16) außenumfangsseitig zumindest teilweise von wenigstens einem weiteren, zwischen dem Radlager (16) und dem Radträger (12) angeordneten Wärmeisolationselement (26) umgeben ist.

7. Fahrzeug, mit wenigstens einer Radträgereinrichtung (10) nach einem der Ansprüche 1 bis 6.

## Claims

1. Wheel carrier device (10) for a vehicle, comprising at least one wheel carrier (12), which has at least one bearing point (14), at which at least one wheel bearing (16) is to be mounted for rotatably mounting a wheel hub, and is at least mostly surrounded on the outer circumference by at least one thermal insulation element (22),
**characterized in that**
the thermal insulation element (22) has direct contact with an outer circumferential casing surface (20) of the wheel carrier (12) and the thermal insulation element (22) at least partially surrounds the bearing point (14) on at least two different sides (S1) of the bearing point (14).

2. Wheel carrier device (10) according to claim 1,
**characterized in that**
the thermal insulation element (22) overlaps the bearing point (14) at least partially, in particular at least predominantly or completely.

3. Wheel carrier device (10) according to claim 1 or 2,
**characterized in that**
the thermal insulation element (22) surrounds the bearing point (14) at least predominantly on the at least two different sides (S1) of the bearing point (14).

4. Wheel carrier device (10) according to any one of the preceding claims, **characterized in that**
the wheel carrier (12) is made from a first, in particular metallic, material and the thermal insulation element (22) is made from a second material which is different from the first material, in particular plastic.

5. Wheel carrier device (10) according to any one of the preceding claims, **characterized in that**
the wheel carrier device (10) comprises the wheel bearing (16) which is arranged on the bearing point (14).

6. Wheel carrier device (10) according to claim 5,
**characterized in that**
the wheel bearing (16) is surrounded at least partially on the outer circumference by at least one further thermal insulation element (26) arranged between the wheel bearing (16) and the wheel carrier (12).

7. Vehicle, comprising at least one wheel carrier device (10) according to any one of claims 1 to 6.

## Revendications

1. Dispositif de support de roue (10) pour un véhicule, avec au moins un support de roue (12) qui présente au moins un point d'appui (14) au niveau duquel au moins un palier de roue (16) est à loger pour le logement rotatif d'un moyeu de roue, et est entouré côté périphérie extérieure au moins principalement par au moins un élément d'isolation thermique (22),
**caractérisé en ce que**
l'élément d'isolation thermique (22) touche directement une surface enveloppe (20) côté périphérie extérieure du support de roue (12) et l'élément d'isolation thermique (22) entoure au moins partiellement le point d'appui (14) sur au moins deux côtés différents (S1) du point d'appui (14).

2. Dispositif de support de roue (10) selon la revendication 1,
**caractérisé en ce que**
l'élément d'isolation thermique (22) recouvre le point d'appui (14) au moins partiellement, en particulier au moins principalement ou complètement.

3. Dispositif de support de roue (10) selon la revendication 1 ou 2,
**caractérisé en ce que**
l'élément d'isolation thermique (22) entoure au moins principalement le point d'appui (14) sur les au moins deux côtés différents (S1) du point d'appui (14).

4. Dispositif de support de roue (10) selon l'une quelconque des revendications précédentes,
**caractérisé en ce que**
le support de roue (12) est formé en un premier matériau, en particulier métallique et l'élément d'isolation thermique (22) est formé en un second matériau différent du premier matériau, en particulier en une matière plastique.

5. Dispositif de support de roue (10) selon l'une quelconque des revendications précédentes,
**caractérisé en ce que**
le dispositif de support de roue (10) présente le palier de roue (16) qui est agencé au niveau du point d'appui (14).

6. Dispositif de support de roue (10) selon la revendication 5,
**caractérisé en ce que**
le palier de roue (16) est entouré côté périphérie extérieure au moins partiellement par au moins un autre élément d'isolation thermique (26) agencé entre le palier de roue (16) et le support de roue (12).

7. Véhicule avec au moins un dispositif de support de roue (10) selon l'une quelconque des revendications 1 à 6.
